# EUROPEAN PATENT APPLICATION

(11) **EP 1 247 736 A1**
(43) Date of publication of application: **09.10.2002**
(21) Application number: 02006318.6
(22) Date of filing: 20.03.2002
(51) Int. Cl.: B64C 27/00, B64C 27/12, B64C 11/00

(54) **Aircraft with rotating mechanical energy accumulator means**

(30) Priority: 06.04.2001 GB 0108659
(71) Applicant: WESTLAND HELICOPTERS LIMITED, Yeovil, Somerset BA20 2YB (GB)
(72) Inventor: Alford, Adrian Gower, Yeovil, Somerset BA21 3HL (GB)
(74) Representative: Lucking, David John

(57) **Abstract**

An aircraft includes an impeller (12;T), an engine (10), and a transmission (14) to transmit drive from the engine (10) to the impeller (12;T), and means (25; 35,36) to use engine power to rotate a mechanical energy accumulator means (28; 28a), and means (25; 35,36) to recover power from the inertia of the rotating mechanical energy accumulator means (28; 28a) and to transmit the recovered power to the impeller (12;T).

## Description

This invention relates to an aircraft having an impeller and more particularly but not exclusively to a helicopter which has an impeller which is a main sustaining rotor of the helicopter.

It is well known that there are benefits in providing a helicopter with a rotor system having high rotational inertia, namely
a) long intervention times following partial or total loss of engine power;
b) small variations in rotor speed during aggressive manoeuvring;
c) ease of rotor speed regulation during autorotative flight; and
d) ease of rotor speed regulation during engine-off landings.

Because in conventional helicopters, the blades of the main sustaining rotor are responsible for the majority of the rotor/transmission system's overall inertia, one way of increasing the rotor/transmission system's overall inertial would be to add weight to the tips of the rotor blades. However using such an approach increases the weight of the helicopter which reduces the helicopter's payload ability and/or operating range capability. Moreover, in order to retrofit such additional tip weights, modifications would have to be made to make the rotor hub and blades stronger. Also, increasing the blade weight results in a loss of manoeuvring agility.

According to one aspect of the invention we provide an aircraft including an impeller, an engine, and a transmission to transmit drive from the engine to the impeller, and means to use engine power to rotate a mechanical energy accumulator means, and means to recover power from the inertia of the rotating mechanical energy accumulator means and to transmit the recovered power to the impeller.

Thus utilising the present invention for a helicopter, the advantages of a high inertia rotor/transmission system are realised without the weight of the blades of the rotor being increased, and thus without loss of manoeuvring agility. To convert an existing helicopter into a helicopter in accordance with the present invention, there is no need to modify the rotor hub or rotor blades to make them stronger.

Moreover, given sufficient rotational energy within the mechanical energy accumulator means, the mechanical accumulator will provide the rotor with sufficient emergency power to provide lift prior to the engine(s) developing and transmitting the necessary power for flight. Also, lift can be achieved in conditions of extreme heat or altitude with payloads which otherwise would be excessive for the power available from the engine or engines.

Preferably, the mechanical energy accumulator means is rotated by engine power at a rotational speed substantially in excess of the rotational speed of the impeller. Thus the weight of the mechanical energy accumulator means may be maintained at a minimum whilst by rotating the mechanical energy accumulator means at very high rotational speeds, a substantial increase in the effective inertia of the transmission and impeller system may be achieved.

In one embodiment, the mechanical energy accumulator means is a single flywheel although to avoid gyroscopic moments being imparted to the airframe preferably the mechanical energy accumulator means includes a pair of flywheels arranged to contra-rotate.

In each case, the or each flywheel may be made of a high tensile strength low density material, and may have a low diameter to thickness ratio so that the mechanical energy accumulator means may readily be accommodated within the airframe.

In a first embodiment, the mechanical energy accumulator means is rotated by means of a mechanical connection to the transmission, and if desired power is recovered from the rotating mechanical energy accumulator means and transmitted to the impeller via the or another mechanical connection to the transmission.

The transmission between impeller and engine may typically include means to disengage the impeller from the engine, such as for example a freewheel and/or clutch. The or each mechanical connection may be provided between the disengaging means and the impeller.

Although any kind of mechanical connection between the mechanical energy accumulator means and the transmission may be provided, preferably the mechanical connection includes a gear driven from a gear of the transmission.

In another embodiment the mechanical energy accumulator means is rotated by an electric motor means to which electrical power is provided from an electric generator means driven from the transmission. Thus there is no mechanical connection between the transmission and the mechanical energy accumulator means to enable the mechanical energy accumulator means to be rotated. If desired, a mechanical connection may be provided between the transmission and mechanical energy accumulator means to enable power to be recovered from the inertia of the rotating mechanical energy accumulator means and transmitted to the impeller, although preferably where the impeller is rotated by an electric motor means, power is recovered from the rotating mechanical energy accumulator means via an electric generating means drivable by the mechanical energy accumulator means, which electric generator means generates electrical power to drive an electric motor means which provides drive to the transmission.

Further alternatively, the mechanical energy accumulator means may be rotated by means of a mechanical connection to the transmission, whilst power is recovered from the rotating mechanical energy accumulator means via an electric generating means drivable by the mechanical energy accumulator means which generates electrical power to drive an electric motor means which provides drive to the transmission.

Where the mechanical energy accumulator means is rotated by an electric motor and the rotating mechanical energy accumulator means generates electricity to drive an electric motor whereby power is recovered from the rotating mechanical energy accumulator means, the electric generator means which is driven from the transmission and the electric motor means which is driven by electrical power generated by the electric generating means driven from the mechanical energy accumulator means, may be common components, and the electric motor means which drives the mechanical energy accumulator means and the electric generator means driven from the mechanical energy accumulator means may be common components.

The invention is particularly but not exclusively useful where the aircraft is a helicopter and the impeller is a main sustaining rotor of the helicopter. However, where the helicopter is of the kind which has a tail rotor, the impeller of the invention may be the tail rotor.

According to a second aspect of the invention we provide in combination, a transmission for an aircraft for transmitting drive from an engine of the aircraft to an impeller thereof, and a mechanical energy accumulator means, there being means to use engine power to rotate the mechanical energy accumulator means, and means to recover power from the inertia of the rotating mechanical energy accumulator means and to transmit the recovered power to the impeller.

According to a third aspect of the invention we provide a method of operating an aircraft which includes an impeller, and a transmission to transmit drive from the engine to the impeller, the method including in a first mode of operation, using engine power to rotate a mechanical energy accumulator means, and in a second mode of operation, recovering power from the inertia of the mechanical energy accumulator means, and transmitting the recovered power to the impeller.

The invention will now be described with reference to the accompanying drawings in which:-
FIGURE 1 is a schematic illustration of a helicopter in accordance with the invention;
FIGURE 2 is a schematic illustration of a helicopter in accordance with an alternative embodiment of the invention.
FIGURE 3 is an illustrative view of a helicopter to which the present invention may be applied.

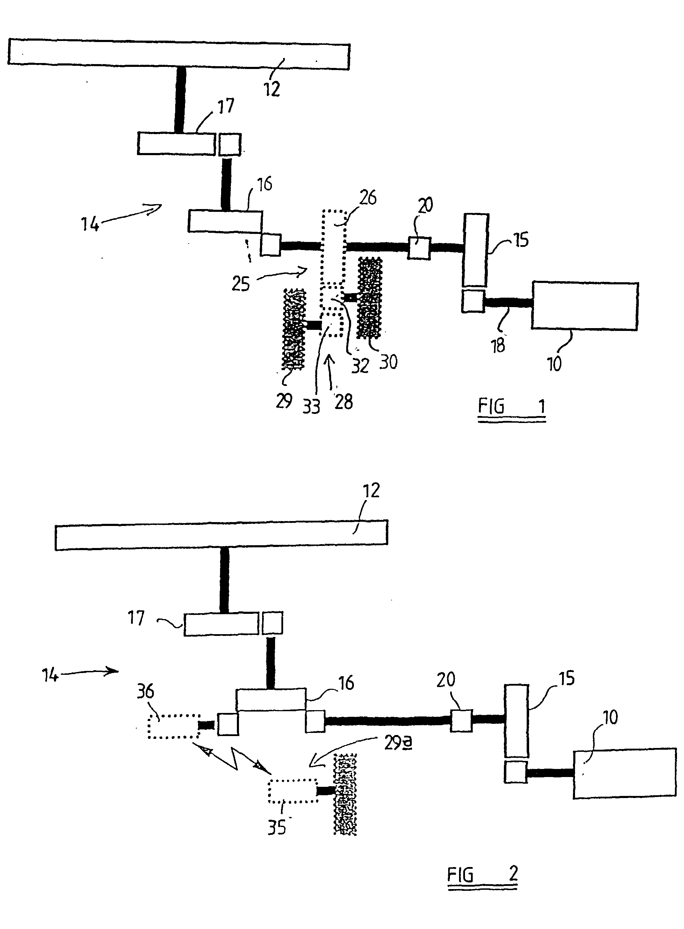

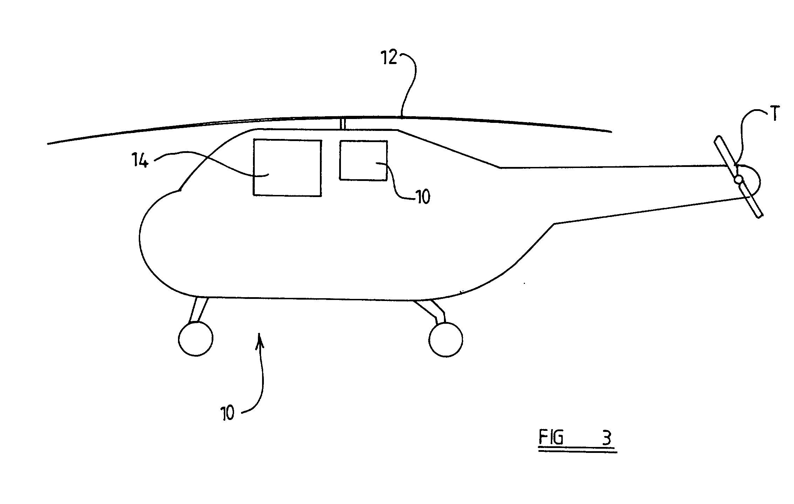

Referring to figures 1 and 3 a helicopter H has an engine 10 or engines, a main sustaining rotor 12 including a plurality of rotor blades, and a transmission 14 by means of which drive is transmitted from the engine 10 to the rotor 12.

In this example, the transmission 14 includes a first reduction gear 15, a second reduction gear 16, and a third reduction gear 17, by means of which the rotational speed of an output member 18 of the engine 10 is converted to a desired rotor 12 rotational speed.

Between the first reduction gear 15 and the second reduction gear 16 there is a transmission disengaging means 20 which in the present case is a free wheel or clutch which permits the rotor 12 to rotate at a faster rotational speed than that at which it is being driven, if at all, by the engine 10, to allow autorotative flight for example in the event of partial or total engine 10 power loss.

Also between the first reduction gear 15 and the second reduction gear 16 there is a mechanical connection 25 including a gear 26 driven by the transmission 14, by means of which drive may be imparted to a mechanical energy accumulator means 28.

In this example, the mechanical energy accumulator means 28 includes a pair of flywheels 29, 30. A first flywheel 30 has a gear 32 which directly meshes with gear 26 of the mechanical connection 25 and so the first flywheel 30 is rotated in an opposite direction to the gear 26 of the mechanical connection 25. The second flywheel 29 of the pair has a gear 33 which meshes with the gear 32 of the first flywheel 30, so that the first and second flywheels 30, 29 contra-rotate.

Each of the flywheels 29, 30 is made in a low density material with high tensile strength, such as for example only, carbon fibre. The flywheels 29, 30 do not need to be made of higher density materials because the flywheels 29, 30 are contra-rotated at very high speed substantially in excess of the rotational speed of the rotor by at least one or two orders of magnitude, and typically, in the order of 30,000 rpm. At such rotational speeds, even lightweight flywheels 29, 30 have substantial inertia and in accordance with the invention, power is recoverable from the inertia of the mechanical energy accumulator means 28 and may be transmitted to the rotor 12.

Moreover, each flywheel 29, 30 has a low diameter to thickness ratio so that the flywheels 29, 30 may readily be accommodated within the helicopter airframe.

In a first mode of operation of the helicopter, when the engine 10 is actively driving the rotor 12, the engine 10 will also drive the flywheels 29, 30 by virtue of the mechanical connection 25 with the transmission 14. Thus the flywheels 29, 30 will be rotated at high speed and possess a substantial amount of mechanical energy.

In the event of for example, aggressive manoeuvring, when the rotor 12 may impose additional loads on the engine 10, or other conditions which may conventionally result in variations in rotor 12 speed, in the helicopter of the invention, the mechanical energy accumulator means 28 contributes to the general inertia of the rotor 12 and transmission 14 system, thus reducing variations in rotational speeds of the rotor 12. Power due to the inertia of the rotating mechanical energy accumulator means 28 is recovered from the mechanical energy accumulator means 28 via the mechanical connection 25 and transmitted through the transmission 20 to the rotor 12 when required.

It can be seen that the mechanical connection 25 is located upstream of the disengaging means 20. Thus in a second mode of operation when the engine 10 is not actively driving the rotor 12, for example during autorotative flight, but the rotor 12 is continuing to rotate due to its own inertia and/or aerodynamically generated power, the mechanical energy accumulator means 28 will again both reduce variations in the rotational speed of the rotor 12 making the helicopter safer to fly and contribute power to the transmission 44 and hence to the rotor 12 when required. Because the disengaging means 20 is located downstream of the mechanical connection 25, such operation of the mechanical energy accumulator means 28 is isolated from the engine 10.

Various modifications may be made to the embodiment described without departing from the scope of the invention.

For example, it will be appreciated that the transmission 14 shown is purely illustrative, and that in practice the transmission 14 may have more or less gear stages than the three stages 15 to 17 shown.

The mechanical connection 25 to the mechanical energy accumulator means 28 may alternatively be arranged. For example where it is desired to locate the mechanical energy accumulator means 28 further from the transmission 14 than shown, instead of a gear train 26, 32 and 33 mechanical connection 25, a mechanical connection may otherwise be provided, for example utilising drive belts or chains.

Instead of a pair of contra-rotating flywheels 29, 30, the mechanical energy accumulator means 28 may include a single flywheel only, although at least in the example described, a pair is preferred to cancel out any gyroscopic moments which may otherwise be imparted to the airframe by the rotating mechanical energy accumulator means 28. The disengaging means 20 and the mechanical energy accumulator means 28 may be integrated into the engine 10.

In another example, instead of a mechanical connection 25 which is operative both to transmit rotation to the mechanical energy accumulator means 28 from the transmission 14, and via which power may be recovered from the inertia of the mechanical energy accumulator means 28 and transmitted to the rotor 12, a mechanical connection 25 which provides only for either transmission of rotation to or from the mechanical energy accumulator means 28 may be provided with some other means, such as an electric motor/generating means described below with reference to figure 2, to provide for the recovery of power from or transmission of drive to the mechanical energy accumulator means 28.

Referring now to figures 2 and 3, a helicopter H similar to that described with reference to figure 1 is shown and accordingly similar parts are indicated by the same reference numerals.

The major difference between the helicopters of figure 1 and 2 is that in the helicopter of figure 2, there is no mechanical connection between the mechanical energy accumulator means 28a which is provided, and the transmission 14.

Rather, the mechanical energy accumulator means 28a is rotated in the first mode of operation of the helicopter, by means of an electric motor 35. Electrical power for the motor 35 is generated by an electric generator 36 which is driven from the transmission 14.

The motor 35 preferably rotates the mechanical energy accumulator means 28a at high speed, again typically in the order of 30,000 rpm, thus to impart substantial momentum to the mechanical energy accumulator means 28a. In this example, the mechanical energy accumulator means 28a is a single flywheel similarly constructed and dimensioned to the flywheels 29, 30 of the first embodiment of the invention described above with reference to figure 1. If desired of course, the electric motor 35, or a pair of electric motors may be arranged to contra-rotate a pair of flywheels.

In a second mode of operation when it is desired to recover power from the inertia of the rotating mechanical energy accumulator means 28a, the electric motor 35 is used as an electrical generator to generate electricity. The electric generator 36 which is connected to the transmission 14 is used as an electric motor to impart drive to the transmission 14 and rotor 12 system, the electricity generated by the motor generator 35 providing electrical power to the electric generator/motor 36.

The exchange of mechanical energy between the mechanical energy accumulator means 28 and the transmission 14 in figure 1 requires little control, because the mechanical energy accumulator means 28 is mechanically connected to the transmission 14, and thus the mechanical energy accumulator means simply contributes to the inertia of the transmission 14 and rotor 12 system. In the example of figure 2, again little active control may be required provided that the electric motors/generators 35 and 36 are alternatively able to use or generate electricity without intervention.

If desired, a hybrid arrangement may be provided utilising both mechanical and electrical connections between the mechanical energy accumulator means 28, 28a and the transmission 14.

Although the invention has been described in relation to helicopters with a mechanical energy accumulator 28, 28a which is provided to provide power to the main sustaining rotor of the helicopter H, such an accumulator may be used to provide power to a tail rotor T of the helicopter H additionally or instead of the main rotor 12. Further alternatively, the invention may be applied to other aircraft types which have an impeller such as a rotor or even a propeller to which it is desirable to provide power recovered from the inertia of a mechanical energy accumulator.

## Claims

1. An aircraft (H) including an impeller (12;T), an engine (10), and a transmission (14) to transmit drive from the engine (10) to the impeller (12;T), and means (25;35;36) to use engine power to rotate a mechanical energy accumulator means (25;35;36), and means (25;35;36) to recover power from the inertia of the rotating mechanical energy accumulator means (28;28a) and to transmit the recovered power to the impeller (12;T).

2. An aircraft (H) according to claim 1 **characterised in that** the mechanical energy accumulator means (28;28a) is rotated by engine power at a rotational speed substantially in excess of the rotational speed of the impeller (12).

3. An aircraft (H) according to claim 1 or claim 2 **characterised in that** the mechanical energy accumulator means (28a) is a single flywheel or includes a pair of flywheels (29,30) arranged to contra-rotate.

4. An aircraft (H) according to claim 3 **characterised in that** the or each flywheel (28a;29,30) is made of a high tensile strength low density material and has a low diameter to thickness ratio.

5. An aircraft (H) according to any one of the preceding claims **characterised in that** the mechanical energy accumulator (28) means is rotated by means of a mechanical connection (26,30) to the transmission.

6. An aircraft (H) according to any one of the preceding claims **characterised in that** power is recovered from the rotating mechanical energy accumulator means (28) and transmitted to the impeller (12) via the (26,30) or another mechanical connection to the transmission (14).

7. An aircraft (H) according to claim 5 or claim 6 **characterised in that** the transmission (14) includes means (20) to disengage the impeller (12;T) from the (10), and the or each mechanical connection (26,30) is provided between the disengaging means (20) and the impeller (12;T).

8. An aircraft (H)according to claim 5 or claim 6 or claim 7 **characterised in that** the mechanical connection (26,30) includes a gear (30) driven from a gear (26) of the transmission.

9. An aircraft (H) according to any one of claims 1 to 6 **characterised in that** the mechanical energy accumulator means (28a) is drivable by an electric motor means (35) to which electrical power is provided from an electric generator means (36) driven from the transmission (14)

10. An aircraft (H) according to any one of claims 1 to 4 or claim 9 **characterised in that** power is recovered from the rotating mechanical energy accumulator means (28a) via an electric generating means (35) drivable by the mechanical energy accumulator means (28a), which electric generating means (35) generates electrical power to drive an electric motor means (36) which provides drive to the transmission (14).

11. An aircraft (H) according to claim 10 where dependent upon claim 9 **characterised in that** the electric generator means (36) which is driven from the transmission (14) and the electric motor means (36) which is driven by electrical power generated by the electric generating means (35) driven from the mechanical energy accumulator means(28a), are common components, and the electric motor means (35) which drives the mechanical energy accumulator means (28a) and the electrical generator means (35) driven from the mechanical energy accumulator means (28a) are common components.

12. An aircraft (H) according to any one of the preceding claims **characterised in that** the aircraft is a helicopter (H) and the impeller (12) is a main sustaining rotor (12) of the helicopter.

13. In combination, a transmission (14) for an aircraft (H) for transmitting drive from an engine (10) of the aircraft (H) to an impeller (12;T) thereof, and a mechanical energy accumulator means (28;28a), there being means to use engine power to rotate the mechanical energy accumulator means (28;28a), and means to recover power from the inertia of the rotating mechanical energy accumulator means (28;28a) and to transmit the recovered energy to the impeller (12;T).

14. A method of operating an aircraft (10) which includes an impeller (12;T), and a transmission (14) to transmit drive from the engine (10) to the impeller (12;T), the method including in a first mode of operation, using engine (10) power to rotate a mechanical energy accumulator means (28;28a), and in a second mode of operation, recovering power from the inertia of the mechanical energy accumulator means (28;28a), and transmitting the recovered power to the impeller (12;T).
